# EUROPÄISCHE PATENTSCHRIFT

(11) **EP 3 180 291 B1**
(45) Veröffentlichungstag und Bekanntmachung des Hinweises auf die Patenterteilung: **17.04.2019**
(21) Anmeldenummer: 14753236.0
(22) Anmeldetag: 15.08.2014
(51) Int. Cl.: C02F 1/42, B08B 3/02, F22B 1/28

(54) **WASSERBEHANDLUNGSKARTUSCHE FÜR EIN DAMPFGERÄT UND DAMPFGERÄT**
WATER TREATMENT CARTRIDGE FOR A STEAM DEVICE AND STEAM DEVICE
CARTOUCHE DE TRAITEMENT D'EAU POUR DISPOSITIF À VAPEUR ET DISPOSITIF À VAPEUR

(43) Veröffentlichungstag der Anmeldung: 21.06.2017
(73) Patentinhaber: Alfred Kärcher SE & Co. KG, 71364 Winnenden (DE)
(72) Erfinder: MEISENBACHER, Marc, 70734 Fellbach (DE); ENGELE, Jochen, 73635 Rudersberg (DE)
(74) Vertreter: Hoeger, Stellrecht & Partner Patentanwälte mbB
(86) Internationale Anmeldenummer: PCT/EP2014/067487
(87) Internationale Veröffentlichungsnummer: WO 2016/023593

(56) Entgegenhaltungen:
- WO-A2-2008/017492
- DE-A1-102008 010 914
- KR-A- 20090 083 075

## Beschreibung

Die Erfindung betrifft eine Wasserbehandlungskartusche (wie beispielsweise eine Wasserenthärtungskartusche) für ein Dampfgerät, umfassend ein Gehäuse, in welchem eine erste Strömungskammer und eine zweite Strömungskammer gebildet sind, wobei die erste Strömungskammer einen Einlass für Wasser aufweist, welcher an einem Ringbereich ausgebildet ist, in der ersten Strömungskammer ein Wasserbehandlungsmaterial angeordnet ist und die zweite Strömungskammer einen Auslass für Wasser aufweist, und wobei an dem Auslass eine Kopplungswandung für einen Dichtstutzen des Dampfgeräts angeordnet ist und die Kopplungswandung einen konischen Bereich zum Aufsetzen auf den Dichtstutzen aufweist, welcher eine Dichtlippe zur Anlage an den Dichtstutzen bildet.

Für bestimmte Anwendungen ist es notwendig, Wasser vor der Zuführung zu einem Dampferzeuger eines Dampfgeräts vorzubehandeln und insbesondere zu entkalken (zu enthärten). Üblicherweise erfolgt die Enthärtung über einen Ionentauschprozess.

Aus der US 4,814,078 ist eine Kartusche für ein Wasserfiltersystem bekannt.

Aus der EP 1 340 442 B2 ist ein Getränkeautomat mit Wasserbehälter und Filterpatrone bekannt.

Ein Filtersystem ist aus der JP 2002-136966 A bekannt.

Aus der WO 2008/017492 A2 ist ein Tank für wasserführende Geräte bekannt, wobei ein Sauganschluss am Tank zum Ansaugen von Wasser aus einem Wassertank mit Mitteln zur Erzeugung eines Unterdrucks und ein Filteranschluss zum Anschluss einer Filterkartusche am und/oder im Inneren des Tanks vorgesehen ist. Es sind mechanische Kodierungsstrukturen am Filteranschluss des Wassertanks vorgesehen, um den Einsatz einer hierzu nicht korrespondierenden Filterpatrone auszuschließen.

Der Erfindung liegt die Aufgabe zugrunde, eine Wasserbehandlungskartusche der eingangs genannten Art bereitzustellen, welche eine vorteilhafte Handhabbarkeit aufweist.

Diese Aufgabe wird bei der eingangs genannten Wasserbehandlungskartusche erfindungsgemäß dadurch gelöst, dass die erste Strömungskammer an dem Ringbereich einen Wandungsbereich aufweist, welcher mit dem konischen Bereich über einen Ringsteg verbunden ist, und dass der Wandungsbereich der ersten Strömungskammer die Kopplungswandung umgibt.

Durch den konischen Bereich ist eine Dichtlippe realisiert, wobei sich durch das Aufsetzen eine "automatische" Abdichtung ergibt.

Die konische Dichtlippe hat einen Selbsthemmungseffekt und dadurch wird beispielsweise ein Aufschwimmen der Wasserbehandlungskartusche verhindert.

Es lassen sich auf einfache Weise Fertigungstoleranzen ausgleichen.

Es ergibt sich eine einfache Handhabbarkeit. Es müssen keine zusätzlichen Dichtelemente wie O-Ringe oder dergleichen vorgesehen werden.

Durch die erfindungsgemäße Wasserbehandlungskartusche lässt sich auf einfache Weise verhindern, dass unbehandeltes Wasser einem Dampferzeuger des Dampfgeräts zur Verfügung gestellt wird.

Das Wasserbehandlungsmaterial ist beispielsweise ein Ionentauschermaterial oder ein Filtermaterial (wie Aktivkohle).

Die erste Strömungskammer weist einen Wandungsbereich auf, welcher mit dem konischen Bereich verbunden ist. Dadurch lässt sich die Wasserbehandlungskartusche auf einfache Weise herstellen. Ferner wird eine gewisse Stabilisierung der Kopplungswandung erreicht.

Der Wandungsbereich der ersten Strömungskammer umgibt die Kopplungswandung und umgibt diese insbesondere ringförmig. Dadurch ergibt sich ein kompakter Aufbau der Wasserbehandlungskartusche mit einfacher Handhabbarkeit.

Insbesondere weist der Auslass eine Öffnungsachse auf, welche koaxial zu einer Konusachse für den konischen Bereich ist, wobei sich der konische Bereich von der Öffnungsachse weg erweitert. Dadurch lässt sich auf einfache Weise eine konische Dichtlippe realisieren.

Günstig ist es, wenn ein Konuswinkel des konischen Bereichs im Bereich zwischen 0,5° und 4° und insbesondere im Bereich zwischen 1° und 3° liegt. Dadurch lässt sich auf einfache Weise eine konische Dichtlippe mit einfacher Handhabbarkeit realisieren.

Ganz besonders vorteilhaft ist es, wenn die Kopplungswandung einen Kontaktbereich für ein Ventil, welches am Dichtstutzen sitzt, aufweist, wobei bei an dem Dichtstutzen ordnungsgemäß positionierter Wasserbehandlungskartusche der Kontaktbereich auf das Ventil zu dessen Öffnung wirkt. Dadurch lässt sich beispielsweise die erfindungsgemäße Wasserbehandlungskartusche in einem Wassertank positionieren. Es lässt sich erreichen, dass das Ventil geschlossen ist, wenn die Wasserbehandlungskartusche nicht positioniert ist. Dadurch wird verhindert, dass unbehandeltes Wasser zu einem Dampferzeuger gelangen kann. Durch eine ordnungsgemäße Positionierung lässt sich ein automatisches Öffnen des Ventils erreichen und es kann dann Wasser zu dessen Vorbehandlung durch die Wasserbehandlungskartusche hindurchgefördert werden.

Es ist dann günstig, wenn der Kontaktbereich ein oder mehrere Wandelemente aufweist, welche quer zu einer Öffnungsachse des Auslasses orientiert sind. Dadurch lässt sich auf einfache Weise eine entsprechende Druckkraft auf einen Ventilkörper des Ventils ausüben.

Insbesondere sind das oder die Wandelemente in einem Winkel von mindestens 30° und vorzugsweise mindestens 45° und beispielsweise mindestens 60° zu der Öffnungsachse orientiert. Dadurch lässt sich auf einfache Weise über Aufsetzen der Wasserbehandlungskartusche eine entsprechende Druckkraft für eine Ventilöffnungsbewegung erreichen.

Bei einem Ausführungsbeispiel sitzt der konische Bereich an dem Kontaktbereich oder der konische Bereich sitzt an dem Zwischenbereich, an welchem der Kontaktbereich sitzt. Dadurch lässt sich auf konstruktiv einfache Weise die Kopplungswandung realisieren.

Aus dem gleichen Grund ist es günstig, wenn der Kontaktbereich eine Öffnung aufweist, welche einen Auslass bildet oder fluidwirksam mit dem Auslass in Verbindung steht. Es ergibt sich dadurch eine kompakt aufgebaute Wasserbehandlungskartusche, welche auf einfache Weise handhabbar ist.

Es ist vorteilhaft, wenn ein Verhältnis zwischen einem maximalen Durchmesser des konischen Bereichs und einem Höhenabstand zwischen dem Kontaktbereich am Auslass und am äußeren Ende des konischen Bereichs im Bereich zwischen 1:1,2 und 1:1,7 liegt. Dadurch lässt sich beispielsweise auf einfache Weise eine Ventilbetätigung realisieren mit optimierter Abdichtungswirkung.

Es hat sich als günstig erwiesen, wenn ein Höhenabstand zwischen dem Kontaktbereich am Auslass und einem äußeren Ende des konischen Bereichs im Bereich zwischen 25 mm und 33 mm liegt. Es lässt sich dadurch für ein Ventil eine "lange" Feder verwenden. Es lassen sich dadurch Fertigungstoleranzen auf einfache Weise ausgleichen. Eine "lange" Feder erzeugt eine gleichmäßige Kraft über den gesamten Dichtbereich, unabhängig davon, wie weit die Wasserbehandlungskartusche nach unten gedrückt wird. Es lässt sich über eine relativ große Höhe eine gleichmäßige Federkraft erreichen.

Es ist ferner günstig, wenn ein maximaler Durchmesser des konischen Bereichs im Bereich zwischen 21 mm und 21,5 mm liegt. Es lässt sich dadurch eine große Flexibilität der durch den konischen Bereich gebildeten Dichtlippe realisieren. Ferner lässt sich eine optimierte Durchflussgeschwindigkeit beispielsweise in der Größenordnung 5 m/h für Wasser durch die Wasserbehandlungskartusche erreichen, insbesondere wenn Öffnungen über Schlitze gebildet sind.

Bei einem fertigungstechnisch vorteilhaften Ausführungsbeispiel ist die Kopplungswandung einstückig ausgebildet.

Es kann dabei vorgesehen sein, dass die Kopplungswandung mit einer Wandung der zweiten Strömungskammer verbunden ist und insbesondere einstückig verbunden ist.

Es ist günstig, wenn die zweite Strömungskammer durch ein Fallrohr gebildet ist, welches insbesondere in der ersten Strömungskammer angeordnet ist und/oder welches von Ionentauschermaterial umgeben ist. Insbesondere ist in der zweiten Strömungskammer kein Ionentauschermaterial angeordnet. Es ergibt sich so eine optimierte Strömungsführung mit optimierten Vorbehandlungseigenschaften.

Es ist ferner günstig, wenn das Fallrohr eine Achse aufweist, welche koaxial zu einer Öffnungsachse des Auslasses ist. Dadurch ergibt sich eine optimierte Platznutzung.

Es ist vorteilhaft, wenn zwischen dem Wandungsbereich der ersten Strömungskammer und dem konischen Bereich oder einem Teilbereich des konischen Bereichs ein Zwischenraum gebildet ist. Dieser Zwischenraum stellt eine Art von mechanischer Entkopplung zwischen dem Wandungsbereich der ersten Strömungskammer und der Kopplungswandung her. Es ist dadurch auf einfache Weise ein elastisches Ausweichen des konischen Bereichs ermöglicht, um dessen Dichtungseigenschaften zu optimieren.

Erfindungsgemäß ist der Einlass für die erste Strömungskammer an einem Ringbereich ausgebildet. Es ergibt sich dadurch eine kompakte Bauweise. Insbesondere ist der Ringbereich bei an dem Dampfgerät positionierter Wasserbehandlungskartusche einem Tankboden eines Wassertanks des Dampfgeräts zugewandt. Dadurch lässt sich die Wasserbehandlungskartusche auf einfache Weise in einem Wassertank des Dampfgeräts positionieren.

Eine Wasserzuführung zu der Wasserbehandlungskartusche zu der Vorbehandlung des Wassers lässt sich auf einfache Weise sicherstellen, wenn an dem Ringbereich Abstandshalter für einen Auflagebereich des Dampfgeräts angeordnet sind.

Bei einem Ausführungsbeispiel sind die Abstandshalter durch Stege gebildet und insbesondere durch beabstandete Stege gebildet.

Es kann dabei eine Mehrzahl von beabstandeten radial ausgerichteten Stegen vorhanden sein.

Eine gleichmäßige Wassereinkopplung in die erste Strömungskammer der Wasserbehandlungskartusche lässt sich realisieren, wenn an dem Ringbereich Schlitze gebildet sind, welche in Umfangsrichtung orientiert sind, und zwischen welchen Stege angeordnet sind. Durch die Schlitze hindurch kann Wasser in einen entsprechenden Strömungsraum der ersten Strömungskammer einströmen. Über eine durch die Stege eingestellte entsprechende Öffnungsbreite wird verhindert, dass Wasserbehandlungsmaterial aus der ersten Strömungskammer ausgewaschen wird.

Günstig ist es, wenn die Kupplungswandung mindestens im konischen Bereich elastisch ausgebildet ist und insbesondere über ihre ganze Höhe elastisch ausgebildet ist. Es lässt sich dadurch eine optimierte Dichtwirkung erreichen. Ferner lassen sich Fertigungstoleranzen auf einfache Weise ausgleichen.

Bei einer Ausführungsform ist eine Fixierungseinrichtung vorgesehen, durch welche die Wasserbehandlungskartusche an dem Dampfgerät fixierbar ist und auf den Dichtstutzen des Dampfgeräts aufsetzbar ist beziehungsweise fixierbar ist, wenn die Wasserbehandlungskartusche auf den Dichtstutzen aufgesetzt ist. Es ergibt sich dadurch eine platzsparende Bauweise. Die Fixierungseinrichtung sorgt für eine Fixierung an dem Wassertank oder an einem Gehäuse des Dampfgeräts. Die Fixierungseinrichtung sorgt insbesondere für eine Zentrierung. Beispielsweise lässt sich die Wasserbehandlungskartusche dann auf einfache Weise austauschen und insbesondere über eine entsprechende sowieso vorhandene Tanköffnung austauschen. Die Fixierungseinrichtung kann bei einer Ausführungsform für eine hängende Fixierung der Wasserbehandlungskartusche sorgen.

Bei einem Ausführungsbeispiel weist das Gehäuse eine erste Stirnseite und eine gegenüberliegende zweite Stirnseite auf, wobei die Kopplungswandung zurückgesetzt in dem Gehäuse angeordnet ist und nicht über die nächstliegende Stirnseite herausragt. Es ergibt sich dadurch ein kompakter Aufbau. Die zweite Stirnseite (insbesondere in einem Ringbereich) lässt sich dazu nutzen, Wasser in die erste Strömungskammer einzukoppeln. Ferner lassen sich Abstandshalter, welche sicherstellen, dass entsprechende Strömungswege zur Einkopplung nicht "verstopft" werden, optimiert anordnen.

Die Erfindung betrifft ferner ein Dampfgerät, insbesondere Dampfreinigungsgerät, umfassend einen Wassertank, einen Dichtstutzen, welcher in fluidwirksamer Verbindung mit der Pumpe steht, und eine erfindungsgemäße Wasserbehandlungskartusche, welche an dem Dichtstutzen sitzt und in dem Wassertank angeordnet ist.

Das Dampfgerät stellt Dampf, welcher von einem Dampferzeuger erzeugt wurde, bereit. Der Dampf wird aus vorbehandeltem Wasser erzeugt, welches die Wasserbehandlungskartusche durchlaufen hat und dabei durch die Pumpe gefördert wird.

Durch die Anordnung der Wasserbehandlungskartusche in dem Wassertank ergibt sich eine kompakte Bauweise.

Die Wasserbehandlungskartusche ist insbesondere mittels einer Fixierungseinrichtung relativ zu dem Wassertank fixiert. Beispielsweise sorgt die Fixierungseinrichtung für eine Zentrierung durch eine Sperrung einer Querbeweglichkeit. Insbesondere ragt der Dichtstutzen in einen Innenraum des Wassertanks hinein. Dadurch lässt sich auf einfache Weise eine Ankopplung der Wasserfilterkartusche an dem Dichtstutzen erreichen, wenn die Wasserbehandlungskartusche in dem Wassertank angeordnet ist.

Insbesondere umfasst der Dichtstutzen ein Rohrelement, welches eine Anlagefläche für den konischen Bereich der Wasserbehandlungskartusche aufweist und insbesondere zylindrisch oder konisch ausgebildet ist. Dadurch lässt sich auf konstruktiv einfache Weise eine Abdichtung erreichen. An dem Rohrelement lässt sich auf einfache Weise ein (Tank-)Ventil positionieren.

Ganz besonders vorteilhaft ist es, wenn an dem Dichtstutzen ein Ventil angeordnet ist, welches einen in einer Höhenrichtung beweglichen Ventilkörper umfasst, wobei die Kopplungswandung der Wasserbehandlungskartusche auf den Ventilkörper einwirkbar ist. Es lässt sich dadurch auf einfache Weise erreichen, dass ohne Wasserbehandlungskartusche das Ventil geschlossen ist. Dadurch wird verhindert, dass unbehandeltes Wasser aus dem Wassertank zu dem Dampferzeuger gelangen kann. Wenn die Wasserbehandlungskartusche ordnungsgemäß positioniert ist, dann lässt sich der Ventilkörper entsprechend positionieren und eine Wasserzuströmung zu einer Pumpe beziehungsweise dem Dampferzeuger ist ermöglicht. Über die Wasserbehandlungskartusche kann dabei nur vorbehandeltes Wasser dem Dampferzeuger zuströmen.

Es ist dann günstig, wenn bei ordnungsgemäß positionierter Kopplungswandung an dem Dichtstutzen ein Kontaktbereich der Kopplungswandung auf den Ventilkörper einwirkt und diesen in eine Öffnungsposition zum Durchtritt von Wasser zu der Pumpe hält. Es lässt sich dadurch durch Positionierung der Wasserbehandlungskartusche an dem Dichtstutzen gewissermaßen automatisch eine Öffnungsposition erreichen, wobei gleichzeitig über den konischen Bereich für eine Abdichtung gesorgt ist.

Aus dem gleichen Grund ist es günstig, wenn bei entfernter Wasserbehandlungskartusche das Ventil für den Durchtritt von Wasser aus dem Wassertank zu der Pumpe geschlossen ist. Es wird dadurch auf effektive Weise verhindert, dass unbehandeltes Wasser zu dem Dampferzeuger gelangen kann.

Günstig ist es, wenn an einem Tankboden mindestens ein Abstandshalter für die Wasserbehandlungskartusche angeordnet ist. Es lässt sich dadurch sicherstellen, dass bei positionierter Wasserbehandlungskartusche ein ausreichender Zuführungsraum zur Einkopplung von Wasser in die erste Strömungskammer vorhanden ist.

Beispielsweise erstreckt sich der mindestens eine Abstandshalter in einer Umfangsrichtung und es ist eine Mehrzahl von beabstandeten Abstandshaltern vorgesehen. Dadurch lässt sich insbesondere sicherstellen, dass über eine große wirksame Querschnittsfläche Wasser in die erste Strömungskammer gelangen kann.

Die nachfolgende Beschreibung bevorzugter Ausführungsformen dient im Zusammenhang mit den Zeichnungen der näheren Erläuterung der Erfindung. Es zeigen:
- Figur 1: eine Draufsicht auf ein Ausführungseispiel eines Dampfreinigungsgeräts;
- Figur 2: eine Schnittansicht längs der Linie 2-2 gemäß Figur 1;
- Figur 3: eine Ansicht eines Ausführungsbeispiels einer erfindungsgemäßen Wasserbehandlungskartusche;
- Figur 4: eine Schnittansicht längs der Linie 4-4 gemäß Figur 3;
- Figur 5: eine vergrößerte Teildarstellung eines Bereichs des Dampfreinigungsgeräts gemäß Figur 2 mit einem Wassertank und einer positionierten Wasserbehandlungskartusche gemäß den Figuren 3, 4;
- Figur 6: eine vergrößerte Darstellung des Bereichs A gemäß Figur 5;
- Figur 7: eine vergrößerte Darstellung eines Teilbereichs des Wassertanks gemäß Figur 5 ohne positionierter Wasserbehandlungskartusche;
- Figur 8: eine Draufsicht auf den Wassertankbereich gemäß Figur 7 in der Richtung B; und
- Figur 9: eine Unteransicht der Wasserbehandlungskartusche gemäß Figur 3 in der Richtung C.

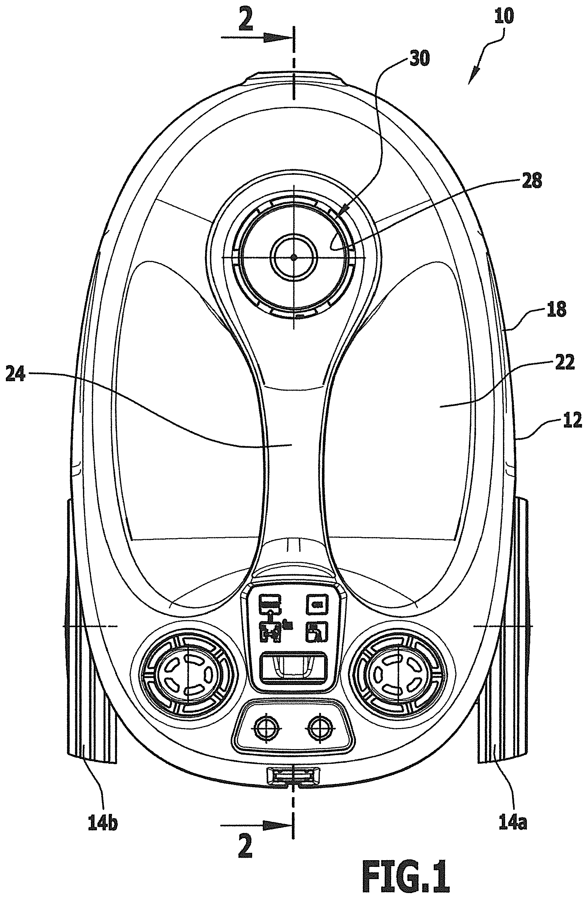

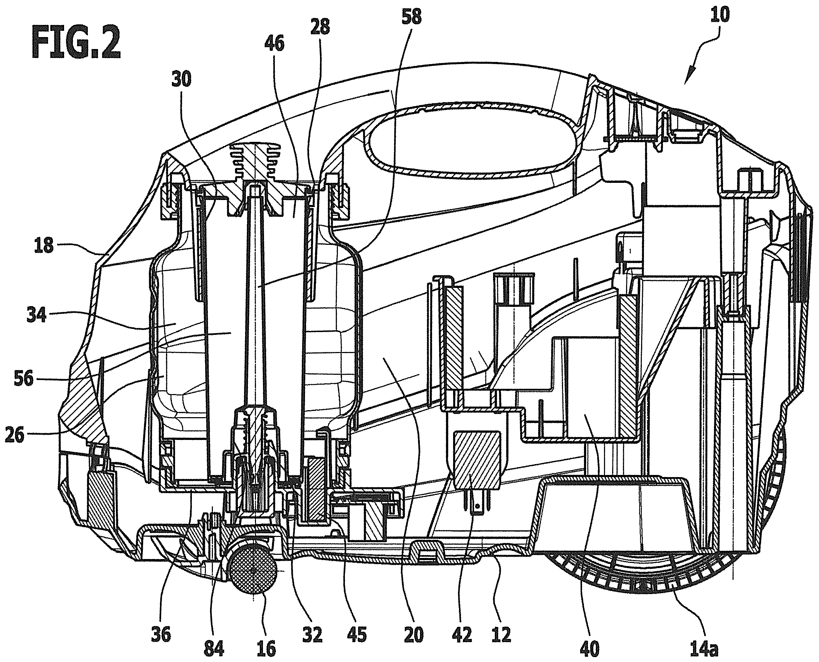

Ein Ausführungsbeispiel eines Dampfgeräts, welches in den Figuren 1 und 2 gezeigt und dort mit 10 bezeichnet ist, umfasst eine Gerätebasis 12. Bei einem Ausführungsbeispiel sind an der Gerätebasis 12 Hinterräder 14a, 14b angeordnet. Ferner ist an der Gerätebasis 12 ein Vorderrad 16 angeordnet.

An der Gerätebasis 12 ist eine Gehäusewandung 18 angeordnet. Durch diese Gehäusewandung 18 ist ein Innenraum 20 gebildet, welcher von einem Außenraum geschützt ist. In dem Innenraum 20 sind Komponenten des Dampfgeräts 10 angeordnet.

Bei einem Ausführungsbeispiel ist an der Gehäusewandung 18 an einer Oberseite 22 ein Tragegriff 24 positioniert.

In dem Innenraum 20 ist ein Wassertank 26 angeordnet. Der Wassertank dient zur Aufnahme von Wasser für die Dampferzeugung.

Der Wassertank 26 weist zu der Oberseite 22 hin eine Öffnung 28 auf. Die Öffnung 28 ist beispielsweise verschließbar. Bei einem Ausführungsbeispiel weist die Gehäusewandung 18 im Bereich der Öffnung 28 einen Einfülltrichter 30 auf, um das Einfüllen von Wasser in den Wassertank 26 von der Oberseite 22 her zu erleichtern.

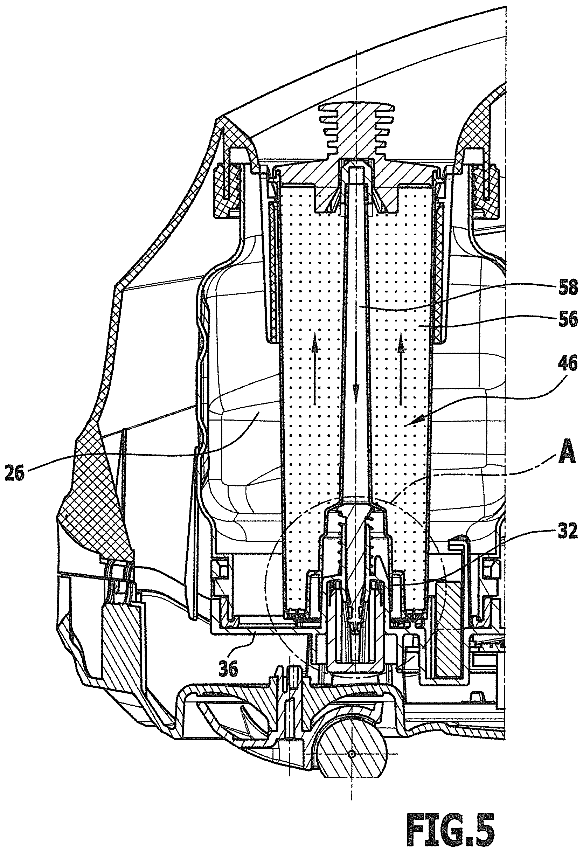

In dem Innenraum 20 des Dampfgeräts 10 ist ein Dichtstutzen 32 (siehe auch die Figuren 5 bis 8) angeordnet. Der Wassertank 26 weist einen Innenraum 34 auf. Dieser Innenraum 34 ist mit Wasser befüllbar. Der Dichtstutzen 32 ragt in den Innenraum 34.

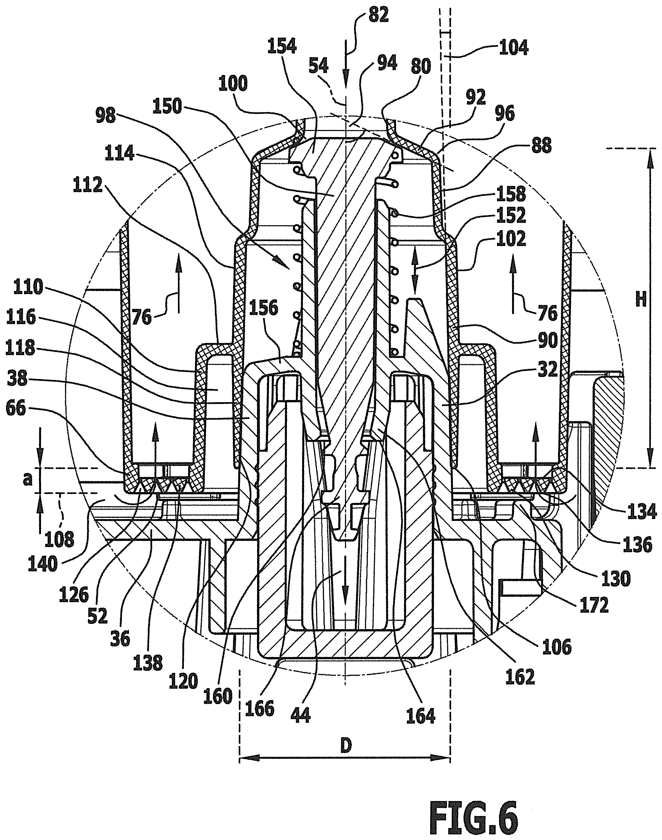

Der Wassertank 26 weist einen Tankboden 36 auf. Dieser Tankboden 36 umgibt ringförmig den Dichtstutzen 32. Zwischen dem Tankboden 36 und dem Dichtstutzen 32 liegt eine fluiddichte Abdichtung vor. Insbesondere ist eine Wand 38 des Dichtstutzens 32 (siehe beispielsweise Figur 6) mit dem Tankboden 36 fluiddicht verbunden und insbesondere einstückig verbunden.

Das Dampfgerät 10 weist einen Dampferzeuger 40 auf. Der Dampferzeuger 40 umfasst insbesondere einen Durchlauferhitzer. Dem Dampferzeuger 40 wird Wasser aus dem Wassertank 26 bereitgestellt, wobei eine Pumpe 42 zur Förderung von Wasser von dem Wassertank 26 zu dem Dampferzeuger 40 vorgesehen ist.

Der Dichtstutzen 32 weist dabei einen Wasserführungsbereich 44 auf (siehe Figur 6), welcher in fluidwirksamer Verbindung mit einem Schwimmer 45 steht.

Das Dampfgerät 10 ist insbesondere ein Dampfreinigungsgerät, welches im Dampferzeuger 40 erzeugten Dampf beispielsweise über eine Düse abgeben kann.

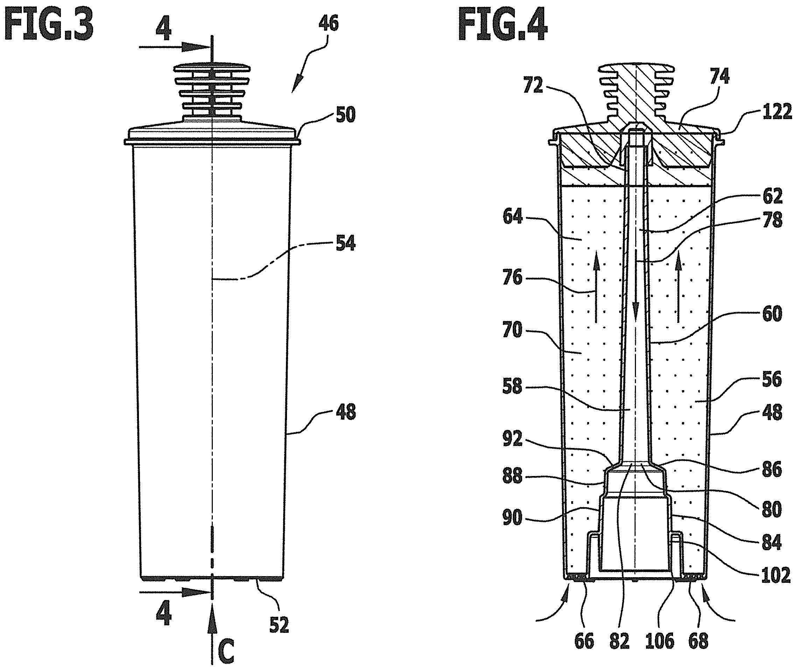

Dem Dampferzeuger 40 ist eine Wasserbehandlungskartusche 46 bezogen auf die Zuströmung von Wasser vorgeschaltet. Die Wasserbehandlungskartusche 46 (vgl. auch die Figuren 3, 4, 9) dient zur Entkalkung (Enthärtung) von Wasser, welches der Pumpe 42 zur Förderung zu dem Dampferzeuger 40 bereitgestellt wird.

Die Wasserbehandlungskartusche 46 ist in dem Wassertank 26 angeordnet.

Die Wasserbehandlungskartusche 46 (vgl. insbesondere die Figuren 3 und 4) umfasst ein Gehäuse 48. Das Gehäuse 48 hat beispielsweise eine leicht konische oder eine zylindrische Form. Das Gehäuse 48 weist eine erste Stirnseite 50 und eine zweite Stirnseite 52 auf. Zwischen der ersten Stirnseite 50 und der zweiten Stirnseite 52 erstreckt sich das Gehäuse 48 längs einer Achse 54.

In dem Gehäuse 48 sind eine erste Strömungskammer 56 und eine zweite Strömungskammer 58 gebildet.

Die zweite Strömungskammer 58 ist als Fallrohr 60 ausgebildet, welches längs der Achse 54 und insbesondere koaxial zu diesem positioniert ist. In diesem Fallrohr 60 ist ein Durchströmungsraum 62 für Wasser gebildet. Dieser Durchströmungsraum 62 hat beispielsweise die Form eines Hohlzylinders oder eines (abgeschnittenen) Hohlkegels.

Die erste Strömungskammer 56 umgibt die zweite Strömungskammer 58. Sie weist einen ringförmigen Strömungsraum 64 auf.

Die erste Strömungskammer 56 weist im Bereich der zweiten Stirnseite 52 einen Ringbereich 66 auf. An dem Ringbereich 66 ist ein Einlass 68 für Wasser gebildet, über welchen Wasser in die erste Strömungskammer 56 in den Strömungsraum 64 einströmen kann. In dem Strömungsraum 64 der ersten Strömungskammer 56 ist ein Ionentauschermaterial 70 und insbesondere ein entsprechendes Harzmaterial angeordnet, welches für eine Entkalkung von durchströmendem Wasser sorgt.

Der ersten Strömungskammer 56 und der zweiten Strömungskammer 58 ist ein Übergabebereich 72 zugeordnet, über welchen Wasser, welches die erste Strömungskammer 56 durchströmt hat und dabei entkalkt wurde, in die zweite Strömungskammer 58 einkoppelbar ist. Der zweite Übergabebereich ist dabei im Bereich der ersten Stirnseite 50 angeordnet.

Die erste Strömungskammer 56 mit dem Ionentauschermaterial 70 ist insbesondere so ausgebildet, dass Wasser, welches aus der Wasserbehandlungskartusche 56 austritt, eine Härte von 0° dH aufweist.

Das Ionentauschermaterialbett in der ersten Strömungskammer 56 weist eine solche Höhe (in Richtung der Achse 54) auf, dass ein entsprechendes Verhältnis zwischen einem Förderstrom an Wasser für die Durchströmung der Wasserbehandlungskartusche 56 und dem Volumen an Ionentauschermaterial 70 bezogen auf eine Durchflussmenge erreicht ist. Beispielsweise liegt der Förderstrom im Bereich bei circa 5 m/h.

An der ersten Stirnseite 50 ist das Gehäuse und damit auch die erste Strömungskammer 56 und die zweite Strömungskammer 58 durch einen Deckel 74 geschlossen. Es kann dabei vorgesehen sein, dass der Übergabebereich 72, welcher für eine Übergabe von Wasser aus der ersten Strömungskammer 56 in die zweite Strömungskammer 58 sorgt, an dem Deckel 74 angeordnet ist. Es ist grundsätzlich auch möglich, dass der Übergabebereich 72 getrennt von dem Deckel 74 an dem Gehäuse 48 angeordnet ist.

Die zweite Strömungskammer 58 ist frei von Ionentauschermaterial 70.

Bei einem Ausführungsbeispiel weist die erste Strömungskammer 56, welche den Durchströmungsraum 62 ringförmig umgibt, eine Hauptströmungsrichtung auf, die mindestens näherungsweise parallel zu der Achse 54 liegt. Diese Hauptströmungsrichtung ist in Figur 4 durch den Pfeil mit dem Bezugszeichen 76 angedeutet. Eine Hauptströmungsrichtung 78 in der zweiten Strömungskammer 58 liegt antiparallel zu der Hauptströmungsrichtung 76 in der ersten Strömungskammer 56.

Die zweite Strömungskammer 58 weist einen Auslass 80 auf, über welchen entkalktes (enthärtetes) Wasser abführbar ist. Dieser Auslass 80 ist an einem Ende des Fallrohrs 60 angeordnet.

Der Auslass 80 weist eine Öffnungsrichtung 82 auf, welche koaxial zu der Achse 54 ist. Die Hauptströmungsrichtung 78 in dem Durchströmungsraum 62 liegt parallel zu der Öffnungsrichtung 82.

An dem Auslass 80 ist eine Kopplungswandung 84 angeordnet. Die Kopplungswandung 84 dient zum Aufsetzen der Wasserbehandlungskartusche 46 auf den Dichtstutzen 32. Die Kopplungswandung 84 ist bei einem Ausführungsbeispiel hinter der zweiten Stirnseite 52 angeordnet, das heißt ragt nicht über die zweite Stirnseite 52 hinaus. Sie ist dadurch vollständig innerhalb des Gehäuses 48 angeordnet.

Bei einem Ausführungsbeispiel ist der Durchströmungsraum 62 rotationssymmetrisch zu der Achse 54. Ferner ist vorzugsweise der Strömungsraum 64 rotationssymmetrisch zu der Achse 54. Ferner ist vorteilhafterweise der Auslass 80 rotationssymmetrisch zu der Achse 54.

Die Kopplungswandung 84 ist ferner rotationssymmetrisch zu der Achse 54 ausgebildet.

Die Kopplungswandung 84 umfasst einen ersten Bereich 86, auf welchen ein zweiter Bereich 88 und ein dritter Bereich 90 folgt. Der erste Bereich 86 ist mit dem Fallrohr 60 am Auslass 80 verbunden und beispielsweise einstückig mit diesem gebildet. Der zweite Bereich 88, welcher auf den ersten Bereich 86 folgt, ist mit dem ersten Bereich 86 verbunden und beispielsweise einstückig mit diesem verbunden. Der dritte Bereich 90 folgt auf den zweiten Bereich 88 und ist mit dem zweiten Bereich 88 beispielsweise einstückig verbunden.

Der erste Bereich 86 weist ein Wandelement 92 auf, welches quer zu der Achse 54 liegt (vgl. Figur 6). Es liegt quer zu der Öffnungsrichtung 82. Ein Winkel 94 zwischen dem Wandelement 92 und der Öffnungsrichtung 82 beziehungsweise der Achse 54 ist insbesondere größer 30° und vorteilhafterweise größer 45°. Bei dem gezeigten Ausführungsbeispiel liegt dieser Winkel 94 bei circa 65°. Der erste Bereich 86 bildet einen Kontaktbereich 96 für ein an dem Dichtstutzen 32 angeordnetes Ventil 98, wie untenstehend noch näher erläutert wird.

In dem Wandelement 92 ist eine zentrale Öffnung 100 um die Achse 54 gebildet. Diese Öffnung 100 ist der Auslass 80.

Der dritte Bereich 90 ist ein konischer Bereich 102. Er hat eine Konusform mit einem Konuswinkel 104 zu der Achse 54. Eine (gedachte) Konusspitze liegt dabei oberhalb des Ringbereichs 66 in einer Richtung von der zweiten Stirnseite 52 zu der ersten Stirnseite 50. Der konische Bereich 102 erweitert sich dadurch zu der zweiten Stirnseite 52 hin.

Der entsprechende Konuswinkel 104 liegt insbesondere im Bereich zwischen 0,5° und 4° und insbesondere im Bereich zwischen 1° und 3°. Bei einem Ausführungsbeispiel liegt der Konuswinkel 104 bei circa 2°.

Der zweite Bereich 88 ist ein Zwischenbereich, welcher zur Verbindung des ersten Bereichs 86 mit dem dritten Bereich 90 (dem konischen Bereich 102) dient. Es kann auch vorgesehen sein, dass der konische Bereich 102 direkt mit dem Kontaktbereich 96 verbunden ist.

Der konische Bereich 102 hat ein äußeres Ende 106. An diesem äußeren Ende 106 weist die Kopplungswandung 84 eine Öffnung mit Kreisquerschnitt auf. Diese Öffnung hat entsprechend dem Konuswinkel 104 einen größeren Durchmesser als ein entsprechendes Ende des ersten Bereichs 86 und bei dem gezeigten Ausführungsbeispiel als ein entsprechendes Ende des zweiten Bereichs 88.

Bei einem Ausführungsbeispiel ist das äußere Ende 106 gegenüber der zweiten Stirnseite 52 zurückgesetzt, das heißt es liegt ein Abstand a zwischen dem äußeren Ende 106 und einer durch die zweite Stirnseite 52 vorgegebenen Begrenzungsebene 108 vor.

Die erste Strömungskammer 56 weist an dem Ringbereich 66 eine Wandung 110 auf, welche der Kopplungswandung 84 zugewandt ist. Diese Wandung 110 weist eine Haupterstreckungsrichtung parallel oder in einem kleinen spitzen Winkel (beispielsweise kleiner als 10°) zur Achse 54 auf. Die Wandung 110 kann dabei parallel zu der Achse 54 ausgebildet sein oder auch konisch ausgebildet sein. Diese Wandung 110 ist durch einen Ringsteg 112 mit der Kopplungswandung 84 und insbesondere dem dritten Bereich 90 der Kopplungswandung 84 verbunden. Der Ringsteg 112 weist dabei eine Normalenrichtung auf, welche parallel zur Achse 54 ist. Die Kopplungswandung 84 bildet oberhalb des Ringstegs 112 (in Richtung der ersten Stirnseite 50) eine Wand 114 der ersten Strömungskammer 56.

Unterhalb des Ringstegs 112 (zu der zweiten Stirnseite 52 hin) ist zwischen der Wandung 110 und dem entsprechenden Teil des dritten Bereichs 90 der Kopplungswandung 84 ein Zwischenraum 116 gebildet. Über diesen Zwischenraum 116 ist eine gewisse mechanische Entkopplung zwischen dem konischen Bereich 102 und der Wandung 110 erreicht.

Die Kopplungswandung 84 wird mit dem dritten Bereich 90 und dabei insbesondere mit demjenigen Teil 118 des konischen Bereichs 102 auf den Dichtstutzen 32 aufgesetzt, welcher zwischen dem Ringsteg 112 und der zweiten Stirnseite 52 liegt.

Die Kopplungswandung 84 ist mindestens in dem konischen Bereich 102 elastisch ausgebildet, das heißt als Feder ausgebildet, so dass die Wasserbehandlungskartusche 46 mit der Kopplungswandung 84 kraftschlüssig auf den Dichtstutzen 32 aufsetzbar ist. Der konische Bereich 102 bildet eine Dichtlippe 120, welche bei ordnungsgemäßer Position der Wasserbehandlungskartusche 46 an dem Dichtstutzen 32 anliegt und für eine wasserdichte Abdichtung zwischen der Wasserbehandlungskartusche 46 und dem Dichtstutzen 32 sorgt.

Die Federwirkung wird insbesondere durch die intrinsische Elastizität des Materials der Kopplungswandung 84 bei entsprechender Materialwahl und Dimensionierung erreicht.

Durch den konischen Bereich 102 wird eine Führung der Wasserbehandlungskartusche 46 beim Aufsetzen auf den Dichtstutzen 32 erreicht. Bei ordnungsgemäß aufgesetzter Wasserbehandlungskartusche 46 wird über den konischen Bereich 102 ein Selbsthemmungseffekt bezüglich der Abdichtung erzielt. Auftriebskräfte wirken in einer Richtung von der zweiten Stirnseite 52 zu der ersten Stirnseite 50 hin.

Ferner lassen sich durch den konischen Bereich 102 Fertigungstoleranzen ausgleichen.

Die Kopplungswandung 84 insbesondere mit dem konischen Bereich 102 stellt gewissermaßen eine große Feder mit Dichtwirkung dar.

Ein Höhenabstand H der Kopplungswandung 84 (Figur 6) zwischen dem ersten Bereich 86 am Auslass 80 und dem äußeren Ende 106 liegt insbesondere im Bereich zwischen 25 mm und 33 mm. Ein Durchmesser D des konischen Bereichs 102 am äußeren Ende 106 (welcher ein maximaler Durchmesser des konischen Bereichs 102 ist) liegt insbesondere im Bereich zwischen 21 mm und 21,5 mm.

Es ist ferner günstig, wenn das Verhältnis zwischen dem (maximalen) Durchmesser D des konischen Bereichs 102 und dem Höhenabstand H im Bereich zwischen 1:1,2 und 1:1,7 liegt.

Bei den angegebenen Zahlenwerten lässt sich eine "lange Feder" über den konischen Bereich 102 realisieren mit einer Länge entsprechend dem Höhenabstand H. Über eine entsprechende große Höhe lässt sich eine gleichmäßige Federkraft erreichen. Dadurch lassen sich Fertigungstoleranzen optimal ausgleichen und es wird eine optimale Dichtwirkung erzielt.

Durch einen entsprechend großen maximalen Durchmesser D lässt sich eine große Flexibilität der Dichtlippe 120 und damit eine große Dichtwirkung erzielen.

Bei den genannten Werten lässt sich eine optimierte Durchflussgeschwindigkeit insbesondere in der Größenordnung von 5 m/h realisieren, um eine gewünschte Enthärtung auf 0° dH des Wassers zu erreichen.

Die Wasserbehandlungskartusche 46 sitzt auf dem Dichtstutzen 32 auf. An dem Gehäuse 48 der Wasserbehandlungskartusche 46 ist eine Fixierungseinrichtung 122 angeordnet, über welche sich die Wasserbehandlungskartusche 46 durch Zentrierung fest positionieren lässt. Die Fixierungseinrichtung 122 sperrt eine Querbeweglichkeit.

Durch diese Anordnung der Wasserbehandlungskartusche 46 lässt sich diese auf einfache Weise austauschen.

Grundsätzlich ist es auch möglich, dass die Wasserbehandlungskartusche 46 an dem Wassertank 26 fixiert ist.

Die Kopplungswandung 84 ist insbesondere aus einem geeigneten Kunststoffmaterial hergestellt. Das Gehäuse 48 und das Fallrohr 60 sind ebenfalls aus einem entsprechenden Kunststoffmaterial und insbesondere aus dem gleichen Kunststoffmaterial wie die Kopplungswandung 84 hergestellt.

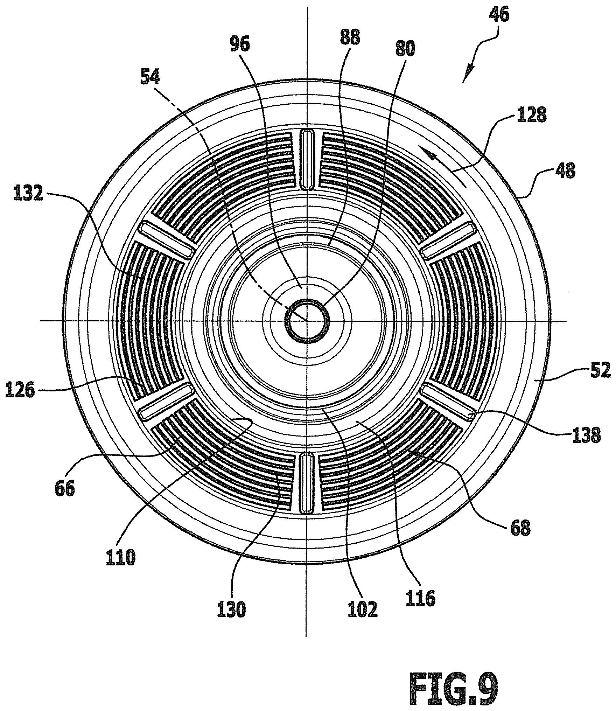

Der an dem Ringbereich 66 gebildete Einlass 68 der ersten Strömungskammer 56 liegt bei in dem Wassertank 26 positionierter Wasserbehandlungskartusche 46 vollständig in dem Innenraum 34 des Wassertanks 26. Der Einlass 68 weist eine Mehrzahl von beabstandeten Schlitzen 126 (Figuren 6 und 9) auf. Diese Schlitze 126 sind in Umfangsrichtung 128 (bezogen auf die Achse 54) angeordnet. Zwischen benachbarten Schlitzen 126 liegen Stege 130, welche ebenfalls in Umfangsrichtung orientiert sind. Über die Schlitze 126 kann Wasser in den ersten Strömungsraum 56 einströmen. Die Stege 130 sind so dimensioniert, dass durch die Schlitze 126 hindurch kein Ionentauschermaterial 70 austreten kann.

Bei einem Ausführungsbeispiel ist eine Mehrzahl von beabstandeten Schlitzen 126 in Gruppen 132 angeordnet, wobei die Gruppen 132 (Kreis-)Segmente bilden. In einer Gruppe 132 ist ein Schlitz 126 in Umfangsrichtung orientiert mit gegenüberliegenden Begrenzungsseiten, welche Kreissegmenten entsprechen. Innerhalb einer Gruppe 132 sind die Schlitze 126 und damit auch die Stege 130 parallel ausgerichtet. Insbesondere sind die Gruppen 132 rotationssymmetrisch zu der Achse 54 angeordnet.

Die Stege 130 verjüngen sich bei einem Ausführungsbeispiel zu der zweiten Stirnseite 52 hin. Die Stege 130 weisen eine Basis 134 auf (Figur 6), und ein äußeres Ende 136, wobei das äußere Ende 136 näher an der zweiten Stirnseite 52 liegt als die Basis 134. Eine Breite eines Stegs 130 ist an dem äußeren Ende 136 geringer als an der Basis 134. Im Querschnitt weist ein Steg 130 die Form eines Dreiecks beziehungsweise eines an der Spitze abgeschnittenen Dreiecks auf. Die Schlitze 126 zwischen benachbarten Stegen 130 verjüngen sich dadurch von der zweiten Stirnseite 52 zu dem Strömungsraum 64 hin.

Zwischen benachbarten Gruppen 132 an Stegen 130 beziehungsweise Schlitzen 126 sind jeweilige Abstandshalter 138 an dem Ringbereich 66 angeordnet. Die Abstandshalter 138 ragen nach unten hinaus. Bei einem Ausführungsbeispiel sind die beabstandeten Abstandshalter 138 bezogen auf die Achse 54 in radialer Richtung orientiert.

Die Abstandshalter 138 begrenzen die Eintauchtiefe, mit welcher die Kopplungswandung 84 auf den Dichtstutzen 32 aufsetzbar ist; wenn die Abstandshalter 138 an dem Tankboden 36 anliegen, dann ist die maximale Eintauchtiefe erreicht.

Die Abstandshalter 138 sind dabei in einer Höhe parallel zu der Achse 54 so dimensioniert, dass, wenn die Wasserbehandlungskartusche 46 über die Abstandshalter 138 an dem Tankboden 36 anliegt, ein Zwischenraum 140 zwischen dem Einlass 68 und dem Tankboden 36 gebildet ist (vgl. Figur 6), über den Wasser aus dem Wassertank 26 durch den Einlass 68 hindurch in den Strömungsraum 64 der ersten Strömungskammer 56 einströmen kann.

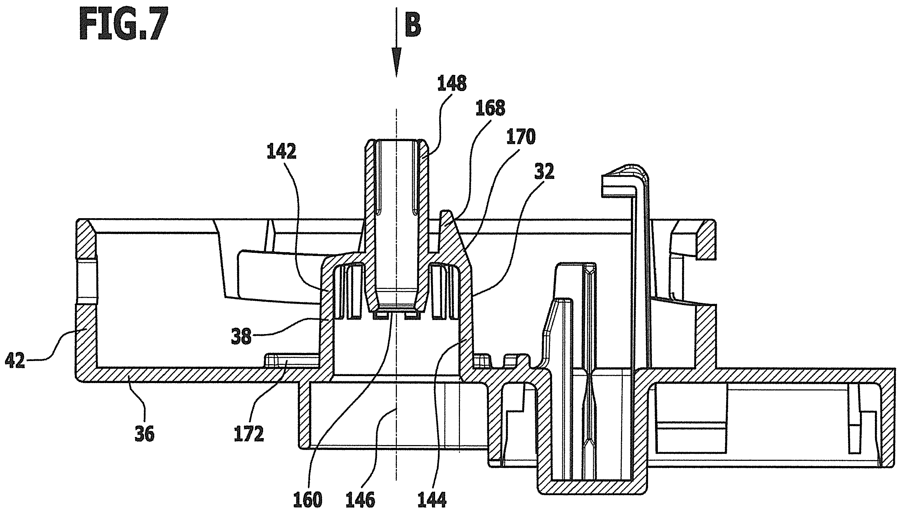

Der Dichtstutzen 32 (Figuren 6 und 7) weist einen Aufnahmebereich 142 für den konischen Bereich 102 der Kopplungswandung 84 auf. Dieser Aufnahmebereich 142 ist insbesondere an dem Tankboden 36 fixiert. Der Aufnahmebereich 142 ist insbesondere an einem Rohrelement 144 gebildet. Der Aufnahmebereich 144 ist rotationssymmetrisch zu einer Achse 146. Ist die Wasserbehandlungskartusche 46 an dem Wassertank 26 und an dem Dichtstutzen 32 fixiert, dann sind die Achsen 54 und die Achsen 146 mindestens näherungsweise koaxial.

Der Aufnahmebereich 142 ist mit einer Außenseite zur Anlage der Dichtlippe 120 zylindrisch oder konisch ausgebildet.

An dem Aufnahmebereich sitzt koaxial zu der Achse 146 ausgerichtet eine Hülse 148. Die Hülse 148 ist insbesondere zylindrisch ausgebildet. In der Hülse 148 ist ein Ventilkörper 150 (Figur 6) angeordnet. Dieser Ventilkörper 150 ist in einer Richtung/Gegenrichtung 152 linear verschieblich. Diese Richtung/Gegenrichtung 152 liegt parallel zu der Achse 146. Bei ordnungsgemäß positionierter Wasserbehandlungskartusche 46 liegt die Richtung/Gegenrichtung 152 parallel zur Öffnungsrichtung 82 des Auslasses 80.

Der Ventilkörper 150 weist einen Betätigungskopf 154 auf, welcher außerhalb der Hülse 148 angeordnet ist. Der Betätigungskopf 154 ist so ausgebildet, dass über ihn der Auslass 80 verschließbar ist beziehungsweise öffenbar ist.

Zwischen dem Betätigungskopf 154 und einer Verbindungswand 156, welche insbesondere ringförmig ausgebildet ist, ist unterhalb der Hülse 148 eine Feder 158 angeordnet. Die Feder 158 stützt sich an der Verbindungswand 156 und dem Betätigungskopf 154 ab. Die Feder ist derart gewählt, dass sie bestrebt ist, den Betätigungskopf 154 von dem Aufnahmebereich 142 wegzubewegen.

Wenn die Wasserbehandlungskartusche 46 nicht an dem Dichtstutzen 32 positioniert ist, dann drückt die Feder 158 den Ventilkörper 150 von dem Aufnahmeraum 142 weg (in Figur 6 nach oben).

Die Hülse 148 weist einen Auslass 160 auf.

Bei einem Ausführungsbeispiel ist dieser Auslass 160 innerhalb des Rohrelements 144 angeordnet. Der Ventilkörper 150 ist durch diesen Auslass 160 hindurchgeführt. Der Auslass 160 ist an einem Auslassbereich 162 der Hülse 148 gebildet. Eine Stirnseite 164 dieses Auslassbereichs 162 bildet einen Ventilsitz für den Ventilkörper 150. Der Ventilkörper 150 weist abgewandt dem Betätigungskopf 154 ein Gegenelement 166 für den Ventilsitz an dem Auslassbereich 162 auf. Wenn dieses Gegenelement 166 gegen den Auslassbereich 162 gedrückt ist, dann ist das Ventil 98 geschlossen, das heißt es kann kein Wasser durch den Auslass 160 strömen.

Der Auslass 160 steht in fluidwirksamer Verbindung mit der Pumpe 42.

Wenn die Wasserbehandlungskartusche 56 nicht an dem Wassertank 26 positioniert ist, dann drückt die Feder 158 das Gegenelement 166 an den Auslassbereich 162 und der Auslass 160 ist geschlossen. Dadurch kann Wasser, welches sich in dem Innenraum 34 des Wassertanks 26 befindet, nicht durch den Auslass 160 hindurch zu der Pumpe 42 gelangen. Das Ventil 98 ist geschlossen und Wasser kann aus dem Wassertank 26 nicht austreten.

Der Betätigungskopf 154 ist angepasst an den Kontaktbereich 96 (den ersten Bereich 86) der Kopplungswandung 84 ausgebildet. Über den Kontaktbereich 96 lässt sich ein entsprechender Druck auf den Ventilkörper 150 entgegen der Federkraft der Feder 158 ausüben und es lässt sich dadurch das Gegenelement 166 von dem Auslassbereich 162 abheben. Dadurch wiederum lässt sich der Auslass 160 öffnen und Wasser, welches die Wasserbehandlungskartusche 46 durchlaufen hat, kann der Pumpe 42 zugeführt werden.

Wenn die Wasserbehandlungskartusche 46 ordnungsgemäß an dem Dichtstutzen 32 positioniert ist, dann ist über die Dichtlippe 120 des konischen Bereichs 102 eine Abdichtung zwischen der Wasserbehandlungskartusche 46 und dem Dichtstutzen 32 erreicht.

Bei ordnungsgemäßer Positionierung drückt die Wasserbehandlungskartusche 46 über ihren Kontaktbereich 96 den Ventilkörper 150 in einer Richtung, welche von der ersten Stirnseite 50 zu der zweiten Stirnseite 52 verläuft, wodurch das Gegenelement 166 von dem Auslassbereich 162 abgehoben ist. Dadurch kann Wasser aus dem Auslass 160 austreten.

Der Ventilkörper 150 ist so ausgebildet und weist insbesondere einen oder mehrere Kanäle auf, über welche dann Wasser aus dem Durchströmungsraum 62 der zweiten Strömungskammer 58 (welches entsprechend enthärtet wurde) aus dem Auslass 80 hindurch durch die Hülse 158 hindurch aus dem Auslass 160 der Hülse 148 strömen kann und damit zu dem Dampferzeuger 40 durch die Pumpe 42 befördert werden kann.

Ein ordnungsgemäßes Aufsetzen der Wasserbehandlungskartusche 46 auf den Dichtstutzen 32 öffnet das Ventil 98. Es wird dabei gleichzeitig eine Abdichtung zwischen der Kopplungswandung 84 und dem Dichtstutzen 32 erreicht.

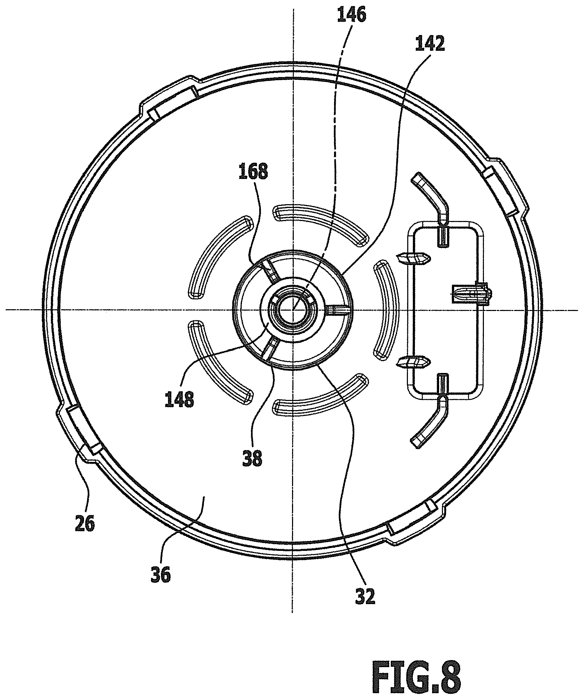

Bei einem Ausführungsbeispiel sind an dem Aufnahmebereich 142 des Dichtstutzens 32 ein oder mehrere Einführhilfselemente 168 für die Kopplungswandung 84 angeordnet. Ein Einführhilfselement 168 weist eine Schrägfläche 170 auf, welche in einem spitzen Winkel zu der Achse 146 liegt. Es ist dadurch eine schiefe Ebene gebildet. Durch das Vorsehen von mehreren beabstandeten Einführhilfselementen 168 (vgl. Figur 8) lässt sich eine Zentrierung der Kopplungswandung 84 beim Aufsetzen auf den Dichtstutzen 32 erreichen. Dadurch lässt sich auf einfache Weise eine koaxiale Ausrichtung der Achsen 54 und 146 erreichen. Dadurch wiederum lässt sich die Dichtwirkung der Dichtlippe 120 optimieren.

An dem Tankboden 32 sind Abstandshalter 172 für die Wasserbehandlungskartusche 46 und insbesondere deren Ringbereich 66 angeordnet. Die Abstandshalter 172 ragen über den Tankboden 32 hinaus. Es ist insbesondere eine Mehrzahl von beabstandeten Abstandshaltern 172 angeordnet.

Bei einem Ausführungsbeispiel sind Abstandshalter 172 in Umfangsrichtung bezüglich der Achse 146 angeordnet und sind beispielsweise auf einer Kreislinie angeordnet.

Die Abstandshalter 172 dienen dazu, dass sichergestellt ist, dass ein ausreichender Zwischenraum 140 vorgesehen ist, durch den hindurch Wasser aus dem Innenraum 34 des Wassertanks 26 durch den Einlass 68 in den Strömungsraum 64 der ersten Strömungskammer 56 einströmen kann.

Die erfindungsgemäße Wasserbehandlungskartusche wird bei einem Dampfgerät und insbesondere Dampfreinigungsgerät eingesetzt. Es lassen sich dadurch Kalkablagerungen am Dampferzeuger 40 verhindern beziehungsweise zumindest verringern. Wasser, welches dem Dampferzeuger 40 zugeführt wird, wird in der Wasserbehandlungskartusche 46 insbesondere durch einen Ionentauscherprozess enthärtet. Insbesondere wird die Wasserbehandlungskartusche 46 in Verbindung mit einem Dampferzeuger 40 mit sehr kurzer Aufhaltszeit eingesetzt. Die Wasserbehandlungskartusche 46, welche für eine Vorbehandlung von dem Dampferzeuger 40 zugeführten Wasser sorgt, ist bei dem Dampfgerät 10 in dem Wassertank 26 positioniert. Dadurch ergibt sich eine leichte Austauschbarkeit.

Bei einem Ausführungsbeispiel kann es vorgesehen sein, dass die Wasserbehandlungskartusche 46 selber einen Deckel für den Wassertank 26 bildet.

Insbesondere wird die Wasserbehandlungskartusche 46 durch eine Öffnung 28 hindurchgetaucht und beispielsweise durch die Gehäusewandung 18 gehalten. Die Öffnung 28, welche zum Befüllen des Wassertanks 26 dient, dient dann auch zum Einbringen der Wasserbehandlungskartusche 46 in den Wassertank 26.

Beim Betrieb des Dampfgeräts 10 zieht die Pumpe 42 Wasser durch die Wasserbehandlungskartusche 26. Durch den Einlass 68 (mit den Schlitzen 126) eingekoppeltes Wasser wird durch die erste Strömungskammer 56 mit ihrem Strömungsraum 64 gezogen und es erfolgt eine Wasserenthärtung. Über das Fallrohr 60 wird dann an dem Auslass 80 vorbehandeltes Wasser bereitgestellt. Es ist ein (Tank-)Ventil 98 vorgesehen, welches bei entfernter Wasserbehandlungskartusche 46 aufgrund der Wirkung der Federkraft der Feder 158 geschlossen ist.

Bei ordnungsgemäß positionierter Wasserbehandlungskartusche 46 ist das Ventil 98 geöffnet. Entsprechend kann dann die Pumpe 42 vorzubehandelndes Wasser durch die Wasserbehandlungskartusche 46 ziehen.

Wenn die Wasserbehandlungskartusche 46 auf den Dichtstutzen 32 aufgesetzt ist, dann sorgt der konische Bereich 102 mit seiner Dichtlippe 120 für eine wasserdichte Abdichtung an dem Wassertank 26. Dadurch ist sichergestellt, dass kein unbehandeltes Wasser zu dem Dampferzeuger 40 gelangen kann. Nur Wasser, welches die Wasserbehandlungskartusche 46 mit der ersten Strömungskammer 56 durchlaufen hat, kann an dem Auslass 160 bereitgestellt werden.

Durch den konischen Bereich 102 lässt sich ein Querschnitt der Wasserbehandlungskartusche 46 optimal nutzen. Es wird eine gleichmäßige Durchströmung des Strömungsraums 64 mit dem Ionentauschermaterial 70 bereitgestellt. Dadurch ergibt sich ein gleichmäßiger Verbrauch des Ionentauschermaterials 70 und dadurch wiederum eine optimierte Laufzeit für die Wasserbehandlungskartusche 46. Es lässt sich die gewünschte Durchflussgeschwindigkeit von beispielsweise 5 m/h erreichen.

Die konisch zulaufende Dichtlippe 120 bewirkt eine Führung der Wasserbehandlungskartusche 46 über die Kopplungswandung 84 beim Aufsetzen auf den Dichtstutzen 32. Es wird ein Selbsthemmungseffekt realisiert, der verhindert, dass die Wasserbehandlungskartusche 46 in dem Wassertank 26 aufschwemmt. Ferner lassen sich in gewissem Rahmen Fertigungstoleranzen kompensieren.

Zur Verhinderung, dass unbehandeltes Wasser zu dem Dampferzeuger 40 gelangen kann, sind keine weiteren zusätzlichen Dichtelemente wie O-Ringe oder dergleichen notwendig. Die Dichtlippe 120 ist in die Wasserbehandlungskartusche 46 integriert. Ein Einsetzen beziehungsweise Austauschen der Wasserbehandlungskartusche 46 ist dadurch auf einfache Weise möglich.

Durch das automatische Öffnen des Ventils 98 beim ordnungsgemäßen Einsetzen der Wasserbehandlungskartusche 46 ergibt sich eine einfache Bedienbarkeit bei hoher Betriebssicherheit.

### Bezugszeichenliste

- 10: Dampfgerät
- 12: Gerätebasis
- 14a: Hinterrad
- 14b: Hinterrad
- 16: Vorderrad
- 18: Gehäusewandung
- 20: Innenraum
- 22: Oberseite
- 24: Tragegriff
- 26: Wassertank
- 28: Öffnung
- 30: Einfülltrichter
- 32: Dichtstutzen
- 34: Innenraum
- 36: Tankboden
- 38: Wand
- 40: Dampferzeuger
- 42: Pumpe
- 44: Wasserführungsbereich
- 45: Schwimmer
- 46: Wasserbehandlungskartusche
- 48: Gehäuse
- 50: Erste Stirnseite
- 52: Zweite Stirnseite
- 54: Achse
- 56: Erste Strömungskammer
- 58: Zweite Strömungskammer
- 60: Fallrohr
- 62: Durchströmungsraum
- 64: Strömungsraum
- 66: Ringbereich
- 68: Einlass
- 70: Ionentauschermaterial
- 72: Übergabebereich
- 74: Deckel
- 76: Hauptströmungsrichtung
- 78: Hauptströmungsrichtung
- 80: Auslass
- 82: Öffnungsrichtung
- 84: Kopplungswandung
- 86: Erster Bereich
- 88: Zweiter Bereich
- 90: Dritter Bereich
- 92: Wandelement
- 94: Winkel
- 96: Kontaktbereich
- 98: Ventil
- 100: Öffnung
- 102: Konischer Bereich
- 104: Konuswinkel
- 106: Äußeres Ende
- 108: Begrenzungsebene
- 110: Wandung
- 112: Ringsteg
- 114: Wand
- 116: Zwischenraum
- 118: Teil
- 120: Dichtlippe
- 122: Fixierungseinrichtung
- 126: Schlitze
- 128: Umfangsrichtung
- 130: Stege
- 132: Gruppe
- 134: Basis
- 136: Äußeres Ende
- 138: Abstandshalter
- 140: Zwischenraum
- 142: Aufnahmebereich
- 144: Rohrelement
- 146: Achse
- 148: Hülse
- 150: Ventilkörper
- 152: Richtung/Gegenrichtung
- 154: Betätigungskopf
- 156: Verbindungswand
- 158: Feder
- 160: Auslass
- 162: Auslassbereich
- 164: Stirnseite
- 166: Gegenelement
- 168: Einführhilfselement
- 170: Schrägfläche
- 172: Abstandshalter

## Patentansprüche

1. Wasserbehandlungskartusche für ein Dampfgerät (10), umfassend ein Gehäuse (48), in welchem eine erste Strömungskammer (56) und eine zweite Strömungskammer (58) gebildet sind, wobei die erste Strömungskammer (56) einen Einlass (68) für Wasser aufweist, welcher an einem Ringbereich (66) ausgebildet ist, in der ersten Strömungskammer (56) ein Wasserbehandlungsmaterial (70) angeordnet ist und die zweite Strömungskammer (58) einen Auslass (80) für Wasser aufweist, und wobei an dem Auslass (80) eine Kopplungswandung (84) für einen Dichtstutzen (32) des Dampfgeräts (10) angeordnet ist und die Kopplungswandung (84) einen konischen Bereich (102) zum Aufsetzen auf den Dichtstutzen (32) aufweist, welcher eine Dichtlippe (120) zur Anlage an den Dichtstutzen (32) bildet, **dadurch gekennzeichnet, dass** die erste Strömungskammer (56) an dem Ringbereich (66) einen Wandungsbereich (110) aufweist, welcher mit der Kopplungswandung (84) über einen Ringsteg (112) verbunden ist, und dass der Wandungsbereich (110) der ersten Strömungskammer (56) die Kopplungswandung (84) umgibt.

2. Wasserbehandlungskartusche nach Anspruch 1, **dadurch gekennzeichnet, dass** das Wasserbehandlungsmaterial ein Ionentauschermaterial (70) oder Filtermaterial ist.

3. Wasserbehandlungskartusche nach Anspruch 1 oder 2, **dadurch gekennzeichnet, dass** der Auslass (80) eine Öffnungsachse (82) aufweist, welche koaxial zu einer Konusachse für den konischen Bereich (102) ist, wobei sich der konische Bereich (102) von der Öffnungsachse (82) weg erweitert, und insbesondere, dass ein Konuswinkel (104) des konischen Bereichs (102) im Bereich zwischen 0,5° und 4° und insbesondere im Bereich zwischen 1° und 3° liegt.

4. Wasserbehandlungskartusche nach einem der vorangehenden Ansprüche, **dadurch gekennzeichnet, dass** die Kopplungswandung (84) einen Kontaktbereich (96) für ein Ventil (98), welches am Dichtstutzen (32) sitzt, aufweist, wobei bei an dem Dichtstutzen (32) ordnungsgemäß positionierter Wasserbehandlungskartusche der Kontaktbereich (96) auf das Ventil (98) zu dessen Öffnung wirkt, und insbesondere, dass der Kontaktbereich (96) ein oder mehrere Wandelemente (92) aufweist, welche quer zu einer Öffnungsachse (82) des Auslasses (80) orientiert sind, und insbesondere, dass das oder die Wandelemente (92) in einem Winkel (94) von mindestens 30° zu der Öffnungsachse (82) orientiert sind, und insbesondere, dass der konische Bereich (102) an dem Kontaktbereich (96) sitzt oder der konische Bereich (102) an einem Zwischenbereich (88) sitzt, an welchem der Kontaktbereich (96) sitzt, und insbesondere, dass der Kontaktbereich (96) eine Öffnung (100) aufweist, welche den Auslass (80) bildet oder fluidwirksam mit dem Auslass (80) in Verbindung steht, und insbesondere, dass ein Verhältnis zwischen einem maximalen Durchmesser (D) des konischen Bereichs (102) und einem Höhenabstand (H) zwischen dem Kontaktbereich (96) am Auslass (80) und einem äußeren Ende (106) des konischen Bereichs (102) im Bereich zwischen 1:1,2 und 1:1,7 liegt, und insbesondere, dass ein Höhenabstand (H) zwischen dem Kontaktbereich (96) am Auslass (80) und einem äußeren Ende (106) des konischen Bereichs (102) im Bereich zwischen 25 mm und 33 mm liegt.

5. Wasserbehandlungskartusche nach einem der vorangehenden Ansprüche, **dadurch gekennzeichnet, dass** die Kopplungswandung (84) einstückig ausgebildet ist und/oder dass die Kopplungswandung (84) mit einer Wandung der zweiten Strömungskammer (58) verbunden ist und insbesondere einstückig verbunden ist.

6. Wasserbehandlungskartusche nach einem der vorangehenden Ansprüche, **dadurch gekennzeichnet, dass** die zweite Strömungskammer (58) durch ein Fallrohr (60) gebildet ist, welches insbesondere in der ersten Strömungskammer (56) angeordnet ist und/oder welches von Ionentauschermaterial (70) umgeben ist, und insbesondere, dass das Fallrohr (60) eine Achse (54) aufweist, welche koaxial zu einer Öffnungsachse (82) des Auslasses ist.

7. Wasserbehandlungskartusche nach einem der vorangehenden Ansprüche, **dadurch gekennzeichnet, dass** der Wandungsbereich (110) der ersten Strömungskammer (56) die Kopplungswandung (84) ringförmig umgibt, und insbesondere, dass zwischen dem Wandungsbereich (110) der ersten Strömungskammer (56) und dem konischen Bereich (102) oder einem Teilbereich (118) des konischen Bereichs (102) ein Zwischenraum (116) gebildet ist.

8. Wasserbehandlungskartusche nach einem der vorangehenden Ansprüche, **dadurch gekennzeichnet, dass** der Ringbereich (66) bei an dem Dampfgerät (10) positionierter Wasserbehandlungskartusche einen Tankboden (36) eines Wassertanks (26) des Dampfgeräts (10) zugewandt ist, und insbesondere, dass an dem Ringbereich (66) Abstandshalter (138) für einen Auflagebereich (32) des Dampfgeräts (10) angeordnet sind, und insbesondere, dass die Abstandshalter (138) durch Stege gebildet sind und insbesondere durch beabstandete Stege gebildet sind, und insbesondere, dass eine Mehrzahl von beabstandeten, radial ausgerichteten Stegen vorgesehen sind, und insbesondere, dass an dem Ringbereich (66) Schlitze (126) gebildet sind, welche in Umfangsrichtung (128) orientiert sind, und zwischen welchen Stege (130) angeordnet sind.

9. Wasserbehandlungskartusche nach einem der vorangehenden Ansprüche, **dadurch gekennzeichnet, dass** die Kopplungswandung (84) mindestens im konischen Bereich (102) elastisch ausgebildet ist.

10. Wasserbehandlungskartusche nach einem der vorangehenden Ansprüche, **gekennzeichnet durch** eine Fixierungseinrichtung, **durch** welche die Wasserbehandlungskartusche an dem Dampfgerät fixierbar ist.

11. Wasserbehandlungskartusche nach einem der vorangehenden Ansprüche, **dadurch gekennzeichnet, dass** das Gehäuse (48) eine erste Stirnseite (52) und eine gegenüberliegende zweite Stirnseite (54) aufweist, wobei die Kopplungswandung (84) zurückgesetzt in dem Gehäuse (48) angeordnet ist und nicht über die nächstliegende Stirnseite (54) herausragt.

12. Dampfgerät, insbesondere Dampfreinigungsgerät, umfassend einen Wassertank (26), einen Dichtstutzen (32), welcher in fluidwirksamer Verbindung mit einer Pumpe (42) steht, und eine Wasserbehandlungskartusche (46) gemäß einem der vorangehenden Ansprüche, welche an dem Dichtstutzen (32) sitzt und in dem Wassertank (26) angeordnet ist.

13. Dampfgerät nach Anspruch 12, **dadurch gekennzeichnet, dass** die Wasserbehandlungskartusche mittels einer Fixierungseinrichtung (122) relativ zu dem Wassertank (26) fixiert ist.

14. Dampfgerät nach Anspruch 12 oder 13, **dadurch gekennzeichnet, dass** der Dichtstutzen (32) in einen Innenraum (34) des Wassertanks (26) hineinragt und/oder dass der Dichtstutzen (32) ein Rohrelement (144) umfasst, welches eine Anlagefläche für den konischen Bereich (102) der Wasserbehandlungskartusche (46) aufweist und insbesondere zylindrisch oder konisch ausgebildet ist und/oder dass an dem Dichtstutzen (32) ein Ventil (98) angeordnet ist, welches einen in einer Höhenrichtung beweglichen Ventilkörper (150) umfasst, wobei die Kopplungswandung (84) der Wasserbehandlungskartusche (46) auf den Ventilkörper (150) einwirkbar ist, und insbesondere, dass bei ordnungsgemäß positionierter Kopplungswandung (84) an dem Dichtstutzen (32) ein Kontaktbereich (96) der Kopplungswandung (84) auf den Ventilkörper (150) einwirkt und diesen in eine Öffnungsposition zum Durchtritt von Wasser zu der Pumpe (42) hält, und insbesondere, dass bei entfernter Wasserbehandlungskartusche (46) das Ventil (98) für den Durchtritt von Wasser aus dem Wassertank (26) zu der Pumpe (42) geschlossen ist.

15. Dampfgerät nach einem der Ansprüche 12 bis 14, **dadurch gekennzeichnet, dass** an einem Tankboden (36) mindestens ein Abstandshalter (172) für die Wasserbehandlungskartusche (46) angeordnet ist, und insbesondere, dass der mindestens eine Abstandshalter (172) sich in einer Umfangsrichtung erstreckt, und insbesondere, **gekennzeichnet durch** eine Mehrzahl von beabstandeten Abstandshaltern (172).

## Claims

1. Water treatment cartridge for a steam appliance (10), comprising a housing (48) in which a first flow chamber (56) and a second flow chamber (58) are formed, wherein the first flow chamber (56) has an inlet (68) for water which is formed at an annular region (66), a water treatment material (70) is arranged in the first flow chamber (56), and the second flow chamber (58) has an outlet (80) for water, and wherein a coupling wall (84) for a sealing connecting piece (32) of the steam appliance (10) is arranged at the outlet (80) and the coupling wall (84) has a conical region (102) for placing on the sealing connecting piece (32), which region forms a sealing lip (120) for abutting against the sealing connecting piece (32), **characterized in that** the first flow chamber (56) has at the annular region (66) a wall region (110) which is connected to the coupling wall (84) by way of an annular web (112), and **in that** the wall region (110) of the first flow chamber (56) surrounds the coupling wall (84).

2. Water treatment cartridge in accordance with Claim 1, **characterized in that** the water treatment material is an ion exchanger material (70) or filter material.

3. Water treatment cartridge in accordance with Claim 1 or 2, **characterized in that** the outlet (80) has an opening axis (82) which is coaxial to a cone axis for the conical region (102), wherein the conical region (102) expands away from the opening axis (82), and in particular in that a cone angle (104) of the conical region (102) is in the range between 0.5° and 4° and in particular in the range between 1° and 3°.

4. Water treatment cartridge in accordance with any one of the preceding Claims, **characterized in that** the coupling wall (84) has a contact region (96) for a valve (98) which sits on the sealing connecting piece (32), wherein, when the water treatment cartridge is properly positioned on the sealing connecting piece (32), the contact region (96) acts on the valve (98) for the opening thereof, and in particular **in that** the contact region (96) has one or more wall elements (92) which are oriented transverse to an opening axis (82) of the outlet (80), and in particular **in that** the wall element or elements (92) are oriented at an angle (94) of at least 30° to the opening axis (82), and in particular **in that** the conical region (102) sits on the contact region (96) or the conical region (102) sits on an intermediate region (88) on which the contact region (96) sits, and in particular **in that** the contact region (96) has an opening (100) which forms the outlet (80) or is in fluidic connection with the outlet (80), and in particular **in that** a ratio between a maximum diameter (D) of the conical region (102) and a height distance (H) between the contact region (96) at the outlet (80) and an outer end (106) of the conical region (102) is in the range between 1:1.2 and 1:1.7, and in particular **in that** a height distance (H) between the contact region (96) at the outlet (80) and an outer end (106) of the conical region (102) is in the range between 25 mm and 33 mm.

5. Water treatment cartridge in accordance with any one of the preceding Claims, **characterized in that** the coupling wall (84) is formed as one piece and/or **in that** the coupling wall (84) is connected to a wall of the second flow chamber (58) and in particular is connected as one piece thereto.

6. Water treatment cartridge in accordance with any one of the preceding Claims, **characterized in that** the second flow chamber (58) is formed by a downpipe (60) which in particular is arranged in the first flow chamber (56) and/or which is surrounded by ion exchanger material (70), and in particular **in that** the downpipe (60) has an axis (54) which is coaxial to an opening axis (82) of the outlet.

7. Water treatment cartridge in accordance with any one of the preceding Claims, **characterized in that** the wall region (110) of the first flow chamber (56) annularly surrounds the coupling wall (84), and in particular **in that** an interspace (116) is formed between the wall region (110) of the first flow chamber (56) and the conical region (102) or a subregion (118) of the conical region (102).

8. Water treatment cartridge in accordance with any one of the preceding Claims, **characterized in that** the annular region (66) is facing toward a tank bottom (36) of a water tank (26) of the steam appliance (10) when the water treatment cartridge is positioned on the steam appliance (10), and in particular **in that** spacers (138) for a bearing region (32) of the steam appliance (10) are arranged at the annular region (66), and in particular **in that** the spacers (138) are formed by webs and in particular by spaced apart webs, and in particular **in that** a multitude of spaced apart, radially aligned webs are provided, and in particular **in that** formed at the annular region (66) are slots (126) which are oriented in circumferential direction (128) and between which webs (130) are arranged.

9. Water treatment cartridge in accordance with any one of the preceding Claims, **characterized in that** the coupling wall (84) is of elastic configuration at least in the conical region (102).

10. Water treatment cartridge in accordance with any one of the preceding Claims, **characterized by** a fixing device by which the water treatment cartridge is fixable on the steam appliance.

11. Water treatment cartridge in accordance with any one of the preceding Claims, **characterized in that** the housing (48) has a first face side (52) and an opposite second face side (54), wherein the coupling wall (84) is arranged recessed in the housing (48) and does not protrude over the nearest face side (54).

12. Steam appliance, in particular steam cleaning appliance, comprising a water tank (26), a sealing connecting piece (32) which is in fluidic connection with a pump (42), and a water treatment cartridge (46) in accordance with any one of the preceding Claims, which sits on the sealing connecting piece (32) and is arranged in the water tank (26).

13. Steam appliance in accordance with Claim 12, **characterized in that** the water treatment cartridge is fixed relative to the water tank (26) by means of a fixing device (122).

14. Steam appliance in accordance with Claim 12 or 13, **characterized in that** the sealing connecting piece (32) protrudes into an inner space (34) of the water tank (26) and/or **in that** the sealing connecting piece (32) comprises a tubular element (144) which has an abutment face for the conical region (102) of the water treatment cartridge (46) and in particular is of cylindrical or conical configuration, and/or **in that** arranged on the sealing connecting piece (32) is a valve (98) which comprises a valve body (150) which is movable in a height direction, wherein the coupling wall (84) of the water treatment cartridge (46) is able to act on the valve body (150), and in particular **in that**, when the coupling wall (84) is properly positioned on the sealing connecting piece (32), a contact region (96) of the coupling wall (84) acts on the valve body (150) and holds the same in an opening position for the passage of water to the pump (42), and in particular **in that**, when the water treatment cartridge (46) is removed, the valve (98) is closed for the passage of water from the water tank (26) to the pump (42).

15. Steam appliance in accordance with any one of Claims 12 to 14, **characterized in that** at least one spacer (172) for the water treatment cartridge (46) is arranged on a tank bottom (36), and in particular **in that** the at least one spacer (172) extends in a circumferential direction, and in particular **characterized by** a multitude of spaced apart spacers (172).

## Revendications

1. Cartouche de traitement d'eau pour un appareil à vapeur (10), comportant un boîtier (48) dans lequel une première chambre d'écoulement (56) et une deuxième chambre d'écoulement (58) sont formées, dans lequel la première chambre d'écoulement (56) présente une entrée (68) pour l'eau, laquelle est formée sur une zone annulaire (66), un matériau de traitement d'eau (70) est agencé dans la première chambre d'écoulement (56) et la deuxième chambre d'écoulement (58) présente une sortie (80) pour l'eau, et dans lequel une paroi d'accouplement (84) pour une tubulure d'étanchéité (32) de l'appareil à vapeur (10) est agencée sur la sortie (80) et la paroi d'accouplement (84) présente une zone conique (102) à mettre en place sur la tubulure d'étanchéité (32), laquelle présente une lèvre d'étanchéité (120) destinée à prendre appui sur la tubulure d'étanchéité (32), **caractérisée en ce que** la première chambre d'écoulement (56) présente sur la zone annulaire (66) une zone de paroi (110), laquelle est reliée à la paroi d'accouplement (84) par un élément jointif annulaire (112), et **en ce que** la zone de paroi (110) de la première chambre d'écoulement (56) entoure la paroi d'accouplement (84).

2. Cartouche de traitement d'eau selon la revendication 1, **caractérisée en ce que** le matériau de traitement d'eau est un matériau échangeur d'ions (70) ou un matériau filtrant.

3. Cartouche de traitement d'eau selon la revendication 1 ou 2, **caractérisée en ce que** la sortie (80) présente un axe d'ouverture (82), lequel est coaxial par rapport à un axe de cône pour la zone conique (102), dans lequel la zone conique (102) s'élargit en s'éloignant de l'axe d'ouverture (82), et en particulier **en ce qu'**un angle de cône (104) de la zone conique (102) se situe dans la plage comprise entre 0,5° et 4° et en particulier dans la plage comprise entre 1° et 3°.

4. Cartouche de traitement d'eau selon l'une quelconque des revendications précédentes, **caractérisée en ce que** la paroi d'accouplement (84) présente une zone de contact (96) pour une soupape (98), laquelle repose sur la tubulure d'étanchéité (32), dans lequel, lorsque la cartouche de traitement d'eau est positionnée correctement sur la tubulure d'étanchéité (32), la zone de contact (96) agit sur la soupape (98) pour l'ouverture de celle-ci, et en particulier **en ce que** la zone de contact (96) présente un ou plusieurs éléments de paroi (92), lesquels sont orientés transversalement à un axe d'ouverture (82) de la sortie (80), et en particulier **en ce que** l'élément ou les éléments de paroi (92) sont orientés selon un angle (94) d'au moins 30° par rapport à l'axe d'ouverture (82), et en particulier **en ce que** la zone conique (102) repose sur la zone de contact (96) ou la zone conique (102) repose sur une zone intermédiaire (88) sur laquelle la zone de contact (96) repose, et en particulier **en ce que** la zone de contact (96) présente une ouverture (100), laquelle forme la sortie (80) ou est en liaison fluidique avec la sortie (80), et en particulier **en ce qu'**un rapport entre un diamètre maximal (D) de la zone conique (102) et un écart de hauteur (H) entre la zone de contact (96) sur la sortie (80) et une extrémité extérieure (106) de la zone conique (102) se situe dans la plage comprise entre 1:1,2 et 1:1,7, et en particulier **en ce qu'**un écart de hauteur (H) entre la zone de contact (96) sur la sortie (80) et une extrémité extérieure (106) de la zone conique (102) se situe dans la plage comprise entre 25 mm et 33 mm.

5. Cartouche de traitement d'eau selon l'une quelconque des revendications précédentes, **caractérisée en ce que** la paroi d'accouplement (84) est réalisée d'une seule pièce et/ou **en ce que** la paroi d'accouplement (84) est reliée à une paroi de la deuxième chambre d'écoulement (58) et est en particulier reliée d'une seule pièce.

6. Cartouche de traitement d'eau selon l'une quelconque des revendications précédentes, **caractérisée en ce que** la deuxième chambre d'écoulement (58) est formée par un tuyau de descente (60), lequel est agencé en particulier dans la première chambre d'écoulement (56) et/ou lequel est entouré par le matériau échangeur d'ions (70), et en particulier **en ce que** le tuyau de descente (60) présente un axe (54), lequel est coaxial par rapport à un axe d'ouverture (82) de la sortie.

7. Cartouche de traitement d'eau selon l'une quelconque des revendications précédentes, **caractérisée en ce que** la zone de paroi (110) de la première chambre d'écoulement (56) entoure la paroi d'accouplement (84) de manière annulaire, et en particulier **en ce qu'**un espace intermédiaire (116) est formé entre la zone de paroi (110) de la première chambre d'écoulement (56) et la zone conique (102) ou une zone partielle (118) de la zone conique (102).

8. Cartouche de traitement d'eau selon l'une quelconque des revendications précédentes, **caractérisée en ce que** la zone annulaire (66), lorsque la cartouche de traitement d'eau est positionnée sur l'appareil à vapeur (10), est tournée vers un fond de réservoir (36) d'un réservoir d'eau (26) de l'appareil à vapeur (10), et en particulier **en ce que** des espaceurs (138) pour une zone de support (32) de l'appareil à vapeur (10) sont agencés sur la zone annulaire (66), et en particulier **en ce que** les espaceurs (138) sont formés par des éléments d'écartement et en particulier par des éléments d'écartement distants, et en particulier **en ce qu'**une pluralité d'éléments d'écartement distants orientés radialement sont prévus, et en particulier **en ce que** des fentes (126) sont formées sur la zone annulaire (66), lesquelles sont orientées dans la direction périphérique (128), et entre sont agencés lesquelles des éléments d'écartement (130).

9. Cartouche de traitement d'eau selon l'une quelconque des revendications précédentes, **caractérisée en ce que** la paroi d'accouplement (84) est élastique au moins dans la zone conique (102).

10. Cartouche de traitement d'eau selon l'une quelconque des revendications précédentes, **caractérisée par** un dispositif de fixation au moyen duquel la cartouche de traitement d'eau peut être fixée à l'appareil à vapeur.

11. Cartouche de traitement d'eau selon l'une quelconque des revendications précédentes, **caractérisée en ce que** le boîtier (48) présente une première face frontale (52) et une deuxième face frontale (54) opposée, dans lequel la paroi d'accouplement (84) est agencée en retrait dans le boîtier (48) et ne fait pas saillie de la face frontale (54) la plus proche.

12. Appareil à vapeur, en particulier appareil de nettoyage à vapeur, comportant un réservoir d'eau (26), une tubulure d'étanchéité (32), laquelle est en liaison fluidique avec une pompe (42), et une cartouche de traitement d'eau (46) selon l'une quelconque des revendications précédentes, laquelle repose sur la tubulure d'étanchéité (32) et est agencée dans le réservoir d'eau (26).

13. Appareil à vapeur selon la revendication 12, **caractérisé en ce que** la cartouche de traitement d'eau est fixée par rapport au réservoir d'eau (26) au moyen d'un dispositif de fixation (122).

14. Appareil à vapeur selon la revendication 12 ou 13, **caractérisé en ce que** la tubulure d'étanchéité (32) fait saillie dans un espace intérieur (34) du réservoir d'eau (26) et/ou **en ce que** la tubulure d'étanchéité (32) comporte un élément tubulaire (144), lequel présente une surface d'appui pour la zone conique (102) de la cartouche de traitement d'eau (46) et est en particulier cylindrique ou conique et/ou **en ce qu'**une soupape (98) est agencée sur la tubulure d'étanchéité (32), laquelle comporte un corps de soupape (150) mobile dans un sens de la hauteur, dans lequel la paroi d'accouplement (84) de la cartouche de traitement d'eau (46) peut agir sur le corps de soupape (150), et en particulier **en ce que**, lorsque la paroi d'accouplement (84) est positionnée correctement sur la tubulure d'étanchéité (32), une zone de contact (96) de la paroi d'accouplement (84) agit sur le corps de soupape (150) et retient celui-ci dans une position d'ouverture pour le passage de l'eau en direction de la pompe (42), et en particulier **en ce que**, lorsque la cartouche de traitement d'eau (46) est retirée, la soupape (98) pour le passage de l'eau du réservoir d'eau (26) en direction de la pompe (42) est fermée.

15. Appareil à vapeur selon l'une quelconque des revendications 12 à 14, **caractérisé en ce qu'**au moins un espaceur (172) pour la cartouche de traitement d'eau (46) est agencé sur un fond de réservoir (36), et en particulier **en ce que** le au moins un espaceur (172) s'étend dans une direction périphérique, et en particulier **caractérisé par** une pluralité d'espaceurs (172) distants.
